**Europäisches Patentamt**

**European Patent Office**

**Office européen des brevets**

(19)

(11) Veröffentlichungsnummer: **0 045 444**
**B1**

# EUROPÄISCHE PATENTSCHRIFT

(12)

(45) Veröffentlichungstag der Patentschrift:
**24.10.84**

(51) Int. Cl.³: **H 01 L 25/10, H 02 M 7/155**

(21) Anmeldenummer: **81105797.5**

(22) Anmeldetag: **22.07.81**

(54) **Gleichrichteranlage.**

(30) Priorität: **31.07.80 DE 3029085**

(43) Veröffentlichungstag der Anmeldung:
**10.02.82 Patentblatt 82/6**

(45) Bekanntmachung des Hinweises auf die Patenterteilung:
**24.10.84 Patentblatt 84/43**

(84) Benannte Vertragsstaaten:
**BE DE NL**

(56) Entgegenhaltungen:
**EP - A - 0 027 878**
**FR - A - 2 224 969**
**US - A - 3 081 424**

(73) Patentinhaber: **Siemens Aktiengesellschaft, Berlin und München Wittelsbacherplatz 2, D-8000 München 2 (DE)**

(72) Erfinder: **Bardahl, Nils, Dr., Albert-Schweitzer-Strasse 15, D-8521 Uttenreuth (DE)**

## Beschreibung

Die Erfindung betrifft eine Gleichrichteranlage, die mit gekühlten, im Querschnitt rechteckigen Stromschienen ausgeführt ist und Teilsysteme enthält, jeweils bestehend aus einer dreiphasigen Sekundärwicklung des Gleichrichtertransformators einschliesslich wechselstromseitiger Stromschienen und gesteuerter oder ungesteuerter Halbleiterventile und Sicherungen und gleichstromseitiger Stromschienen, die einen E-förmigen Stern bilden, wobei für je zwei der dreiphasigen Teilsysteme der Gleichrichterschaltung nur ein E-förmiger Stern vorgesehen ist und parallel zu den die Schenkel des E-förmigen Sternes bildenden Gleichstromschienen je eine Wechselstromschiene des ersten Teilsystems und die entsprechende Wechselstromschiene des zweiten Teilsystems angeordnet sind. Eine derartige Gleichrichteranlage ist bereits in der EP-A-0 027 878 vorgeschlagen worden, die im Sinne des Artikels 54 (3) EPÜ zum Stand der Technik im Hinblick auf die benannten Vertragsstaaten DE und NL zählt.

Ferner ist aus der vorveröffentlichten DE-A-2 317 117 eine Gleichrichteranlage bekannt, die in Drehstrombrückenschaltung mit gekühlten, im Querschnitt rechteckigen Stromschienen ausgeführt ist und Teilsysteme enthält, jeweils bestehend aus einer dreiphasigen Sekundärwicklung des Gleichrichtertransformators einschliesslich wechselstromseitiger Stromschienen und Halbleiterventilen und Sicherungen und gleichstromseitiger Stromschienen, die E-förmig ausgebildet sind, und bei der parallel zu den Schenkeln der E-förmigen Gleichstromschienen je eine Wechselstromschiene angeordnet ist.

Der Erfindung liegt die Aufgabe zugrunde, durch Anwendung derartiger E-förmiger Sterne einen kompakten Aufbau einer Gleichrichteranlage in Drehstrombrückenschaltung zu erzielen.

Gemäss der Erfindung wird diese Aufgabe dadurch gelöst, dass die freien Schenkelenden der E-förmigen Sterne der beiden Teilsysteme aufeinander ausgerichtet und über Isolatoren miteinander verbunden sind, während sich die Wechselstromschienen im wesentlichen über die Gesamtlänge der beiden jeweils miteinander verbundenen Schenkel der Sterne erstrecken.

Anhand eines in der Zeichnung dargestellten Ausführungsbeispiels wird die Erfindung im folgenden näher erläutert:

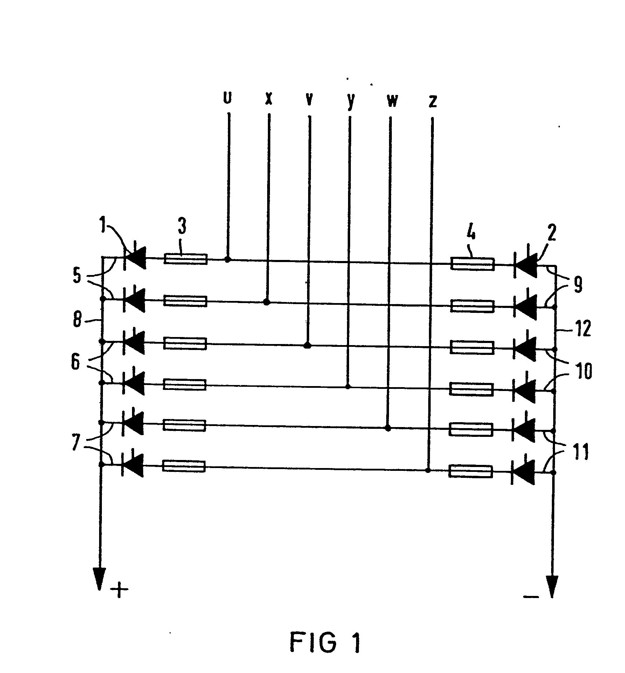

Fig. 1 zeigt schematisch eine aus einem nicht dargestellten Gleichrichtertransformator gespeiste Drehstrombrückenschaltung aus Thyristoren 1, 2 in jedem Brückenzweig mit zugehörigen Sicherungen 3, 4 und die Drehstromzuleitungen u, v, w und x, y, z.

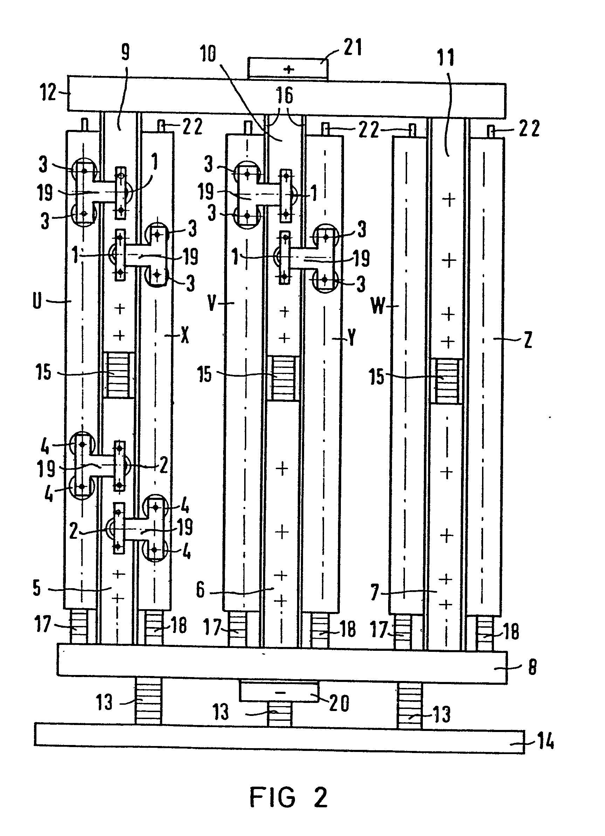

In Fig. 2 ist der konstruktive Aufbau der Gleichrichteranlage in Drehstrombrückenschaltung dargestellt. Die Gleichstrom führenden Schienen 5 bis 7 und 9 bis 11 der Gleichrichteranlage sind mit je einer weiteren Stromschiene 8 bzw. 12 zu je einer E-förmigen Anordnung zusammengesetzt. Die Stromschiene 8 der beispielsweise den Strom in negativer Richtung führenden Anordnung ist über Stützer 13 auf einem Grundrahmen 14 befestigt. Die freien Enden der durch die Stromschienen gebildeten Schenkel beider Anordnungen sind aufeinander ausgerichtet und durch Isolatoren 15 miteinander verbunden. Parallel zu den miteinander verbundenen Schenkeln 5, 9; 6, 10 und 7, 11 sind die Wechselstromschienen u, x; v, y bzw. w, z angeordnet. Die Gleichstromschienen und die zugehörigen Wechselstromschienen sind durch die Schicht 16 aus isolierendem Material voneinander getrennt. Die Wechselstromschienen sind mittels Isolatoren 17, 18 auf der Gleichstromschiene 8 befestigt. Je zwei auf den Wechselstromschienen befestigte Sicherungen 3 bzw. 4 sind mittels eines T-förmigen Anschlussstückes 19 mit den auf den Gleichstromschienen angeordneten Thyristoren 1 bzw. 2 verbunden. Auf den Schienen 8 und 12 sind Anschlussstücke 20 bzw. 21 für die Abnahme des Gleichstromes und an den Wechselstromschienen Anschlussfahnen 22 für die Verbindungsleitungen zu den Sekundärwicklungen des Gleichrichtertransformators vorgesehen. Der Übersichtlichkeit halber sind die Steuergeräte und Schutzbeschaltungen für die Thyristoren nicht dargestellt.

Der beschriebene Aufbau einer Gleichrichteranlage mit zwei übereinander angerodneten E-förmigen Gleichstromsternen lässt sich auch für Umkehrstromrichter verwenden, die Diodengleichrichter oder Thyristoren in den Brückenzweigen enthalten können. Werden Thyristoren eingesetzt, so können zur Verbesserung des Stromübergangs im Umkehrzeitpunkt Thyristor und Sicherung über eine Induktionsschleife aus einer oder mehreren Windungen miteinander verbunden werden.

## Patentansprüche

1. Gleichrichteranlage, die in Drehstrombrückenschaltung mit gekühlten, im Querschnitt rechteckigen Stromschienen ausgeführt ist und Teilsysteme enthält, jeweils bestehend aus einer dreiphasigen Sekundärwicklung des Gleichrichtertransformators einschliesslich wechselstromseitiger Stromschienen und gesteuerter oder ungesteuerter Halbleiterventile und Sicherungen und gleichstromseitiger Stromschienen, die einen E-förmigen Stern bilden, wobei für je zwei der dreiphasigen Teilsysteme der Drehstrombrückenschaltung nur ein E-förmiger Stern vorgesehen ist und parallel zu den die Schenkel des E-förmigen Sternes bildenden Gleichstromschienen je eine Wechselstromschiene des ersten Teilsystems und die entsprechende Wechselstromschiene des zweiten Teilsystems angerodnet sind, dadurch gekennzeichnet, dass die freien Schenkelenden der beiden E-förmigen Sterne (5 bis 7, 9 bis 11) aufeinander ausgerichtet und über Isolatoren (15) miteinander verbunden sind, während sich die Wechselstromschienen (u, v, w, x, y, z) im wesentlichen über die Gesamtlänge der beiden jeweils miteinander verbundenen Schenkel (5, 9; 6, 10; 7, 11) der Sterne erstrecken.

2. Gleichrichteranlage nach Anspruch 1, in Ausführung als Umkehrstromrichter, dadurch gekennzeichnet, dass zur Verbesserung des Stromübergangs im Umkehrzeitpunkt die Halbleiterventile (1, 2) und die zugehörige Sicherung (3) durch je eine Induktionsschleife aus einer oder mehreren Windungen verbunden sind.

**Revendications**

1. Dispositif redresseur, qui est réalisé sous la forme d'un circuit en pont triphasé comportant des rails conducteurs refroidis, de section transversale rectangulaire, et contient des systèmes partiels constitués chacun par un enroulement secondaire triphasé du transformateur de redresseur y compris des rails conducteurs situés du côté à courant alternatif et des valves à semiconducteurs commandées ou non commandées des fusibles et des rails conducteurs situés du côté du courant continu et qui constituent une étoile en forme de E, et dans lequel il est prévu une seule étoile en forme de E pour respectivement deux des systèmes partiels triphasés du circuit en pont triphasé, et respectivement un rail à courant alternatif du premier système partiel et le rail à courant alternatif correspondant du second système partiel sont montés en parallèle avec les rails à courant continu constituant les branches de l'étoile en forme de E, caractérisé par le fait que les extrémités libres des branches des deux étoiles en forme de E (5 à 7, 9 à 11) sont alignées les unes avec les autres et sont reliées entre elles par l'intermédiaire d'isolateurs (15), tandis que les rails à courant alternatif (u, v, w, x, y, z) s'étendent essentiellement sur toute la longueur des deux branches respectivement reliées entre elles (5, 9; 6, 10; 7, 11) des étoiles.

2. Dispositif redresseur suivant la revendication 1, réalisé sous la forme d'un convertisseur à dispositif d'inversion, caractérisé par le fait que, pour l'amélioration du passage du courant au moment de l'inversion, les valves à semiconducteurs (1, 2) et les fusibles associés (3) sont reliés respectivement par l'intermédiaire d'une boucle d'induction formée d'une ou de plusieurs spires.

**Claims**

1. A rectifier arrangement designed as a three-phase bridge circuit with cooled conductor bars of rectangular cross-section, which rectifier arrangement comprises partial systems, each consisting of a three-phase secondary winding of the rectifier transformer including conductor bars at the a.c. end and controlled or uncontrolled semiconductor rectifiers, fuses and conductor bars at the d.c. end to form an E-shaped star, where only one E-shaped star is provided for two of the three-phase partial systems of the three-phase bridge circuit, and there are arranged parallel to the d.c. bars which form the limbs of the E-shaped star an a.c. bar of the first partial system and the corresponding a.c. bar of the second partial system, characterised in that the free limb ends of the two E-shaped stars (5 to 7, 9 to 11) are aligned with one another and mutually coupled by insulators (15), whereas the a.c. bars (u, v, w, x, y, z) essentially extend over the entire length of the two limbs (5, 9; 6, 10; 7, 11) of the stars which are respectively connected to one another.

2. A rectifier arrangement as claimed in claim 1 designed as a two-way rectifier, characterised in that the semiconductor rectifiers (1, 2) and the assigned fuse (3) are respectively connected by an induction loop consisting of one or more windings in order to improve the current changeover at the reversing time.

1/2

FIG 1

FIG 2